# EUROPÄISCHE PATENTSCHRIFT

(11) **EP 3 484 647 B1**
(45) Veröffentlichungstag und Bekanntmachung des Hinweises auf die Patenterteilung: **09.10.2019**
(21) Anmeldenummer: 17733736.7
(22) Anmeldetag: 27.06.2017
(51) Int. Cl.: B23G 5/06, B23G 5/18, B23G 5/20, B23B 51/08

(54) **VERFAHREN ZUR ERZEUGUNG EINER GEWINDEBOHRUNG UND WERKZEUG FÜR DIESES VERFAHREN**
METHOD FOR THE PRODUCTION OF A THREADED HOLE AND TOOL FOR THIS METHOD
PROCÉDÉ DE PRODUCTION D'UN TROU TARAUDÉ ET OUTIL POUR CE PROCÉDÉ

(30) Priorität: 13.07.2016 DE 102016008478
(43) Veröffentlichungstag der Anmeldung: 22.05.2019
(73) Patentinhaber: AUDI AG, 85045 Ingolstadt (DE)
(72) Erfinder: KOPTON, Peter, 85092 Kösching (DE)
(86) Internationale Anmeldenummer: PCT/EP2017/000751
(87) Internationale Veröffentlichungsnummer: WO 2018/010830

(56) Entgegenhaltungen:
- DE-A1- 3 921 734
- DE-A1- 10 061 476
- DE-U- 1 818 609
- JP-A- 2005 230 933
- US-A1- 2008 170 921

## Beschreibung

Die Erfindung betrifft ein Verfahren zur Erzeugung einer Gewindebohrung, insbesondere Gewindesackloch, nach dem Oberbegriff des Patentanspruches 1 sowie ein Gewindebohr-Werkzeug zur Durchführung eines solchen Verfahrens nach dem Oberbegriff des Anspruchs 10. Ein solches Verfahren ist bekannt aus dem Dokument JP2005230933A. Ein solches Werkzeug ist bekannt aus dem Dokument DE1818609U.

Üblicherweise wird beim Gewindebohren in einem ersten Prozessschritt mittels eines Bohrers eine Kernlochbohrung im Werkstück erzeugt. Anschließend wird in einem zweiten Prozessschritt mittels eines separaten Gewindebohrers ein Innengewinde in die Kernlochbohrung eingeschnitten. Je nach Größe weist der Gewindebohrer zwei oder mehrere Schneiden auf. Die Schneiden haben Zähne, die von der Innenwandung der Kernlochbohrung je einen Materialspan abtragen und gegebenenfalls das Material im geringen Maße plastisch verformen. Die Zähne des Gewindebohrers sind verschieden ausgebildet, zum Beispiel verschieden stark abgeflacht. Dadurch nimmt beim Schneiden jeder Zahn in etwa gleich große Materialspäne mit.

In Abkehr zum obigen Gewindebohr-Prozess erfolgt das gattungsgemäße Verfahren mit einem Einschuss-Gewindebohr-Werkzeug, bei dem die Kernlochbohrung und das Innengewinde-Schneiden in einem gemeinsamen Werkzeughub durchgeführt werden. Das Einschuss-Gewindebohr-Werkzeug weist an seiner Bohrerspitze eine Hauptschneide und ein in einer Gewindebohr-Richtung nacheilendes Gewindeprofil mit zumindest einem Gewinde-Schneidzahn auf. In dem Verfahren erfolgt ein Gewindebohr-Hub und anschließend ein gegenläufiger Reversier-Hub. Im Gewindebohr-Hub erzeugt einerseits die Hauptschneide die Kernlochbohrung und andererseits das Gewindeprofil das Innengewinde an der Innenwandung der Kernlochbohrung bis zum Erreichen einer nutzbaren Soll-Gewindetiefe. Der Gewindebohr-Hub wird bei einem Gewindebohr-Vorschub mit dazu synchronisierter Drehzahl des Gewindebohr-Werkzeugs durchgeführt. In einem nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub und damit synchronisierter Reversier-Drehzahl. Dadurch wird gewährleistet, dass das Gewindeprofil des Gewindebohr-Werkzeugs im Gewindegang des Innengewindes belastungsfrei bewegt wird.

Im obigen Verfahren wird zum Ende des Gewindebohr-Hubes der Gewindebohr-Prozess verlangsamt, das heißt der Gewindebohr-Vorschub mit damit synchronisierter Gewindebohr-Drehzahl bis auf 0 reduziert. Diese Verzögerung des Gewindeschneid-Prozesses bis auf eine Gewindebohr-Drehzahl von Null führt jedoch im Stand der Technik zu einer übermäßig großen Schneidbelastung des Gewindeprofils, die zu einem Ausbruch der Schneidzähne oder zu einem Werkzeugbruch führen kann.

Aus der DE 38 80 394 T2 ist ein kombiniertes Werkzeug zum Bohren eines Loches und zum Gewindeschneiden bekannt. Mit dem Gewindebohr-Werkzeug wird zunächst eine Kernlochbohrung erzeugt. Anschließend wird das Gewindebohr-Werkzeug mit seiner Werkzeugachse in einer Kreisbahn um die Bohrungsachse bewegt, und zwar unter Rotation des Gewindebohr-Werkzeuges, wodurch das Gewindeprofil ein Innengewinde in der Kernlochbohrung erzeugt. Im Wesentlichen dasselbe Verfahren ist auch aus der DE 39 39 795 T2 und aus der US 5 678 962 bekannt.

Aus der JP 2005 230933 A ist ein gattungsgemäßes Verfahren zum Erzeugen einer Gewindebohrung in einem Werkstück bekannt. Aus der DE 39 21 734 A1, aus der US 2008/170921 A1 und aus der DE 100 61 476 A1 sind Gewindebohr-Werkzeuge zum Erzeugen einer Gewindebohrung in einem Werkstück bekannt. Ein weiteres Gewindebohr-Werkzeug ist aus der DE 18 18 609 U bekannt.

Die Aufgabe der Erfindung besteht darin, ein Verfahren zur Erzeugung einer Gewindebohrung in einem Werkstück sowie ein Gewindebohr-Werkzeug zur Durchführung des Verfahrens bereitzustellen, bei dem die Werkzeug-Belastung reduziert ist.

Die Aufgabe ist durch die Merkmale des Patentanspruches 1 oder 10 gelöst. Bevorzugte Weiterbildungen der Erfindung sind in den abhängigen Ansprüchen offenbart.

Gemäß dem kennzeichnenden Teil des Patentanspruches 1 folgt nach dem Gewindebohr-Hub nicht unmittelbar der Reversier-Hub, sondern folgt vielmehr ein Nutformschritt, bei dem eine an das Innengewinde anschließende Umlaufnut ohne Gewindesteigung gebildet wird, in der das Gewindeprofil des Gewindebohr-Werkzeuges belastungsfrei drehen kann. Auf diese Weise kann die Gewindebohr-Drehzahl bis auf 0 reduziert werden, ohne dass es aufgrund von übermäßig großer Schneidenbelastung zu einem Werkzeugbruch oder zu einem Ausbrechen des Gewindeprofils kommt.

Wie oben erwähnt, kann das Gewindeprofil des Gewindebohr-Werkzeugs in der im Nutformschritt erzeugten Umlaufnut ohne Gewindesteigung belastungsfrei drehen. Durch die Bereitstellung der Umlaufnut wird es erfindungsgemäß ermöglicht, dass das Gewindebohr-Werkzeug mit einer Schneidkante eine umlaufende Gewindesenkung in der Bohrungsöffnung der Bohrung erzeugt. Die umlaufende Gewindesenkung kann also während des obigen Nutformschrittes erzeugt werden.

Das Gewindebohr-Werkzeug ist in einer ersten Ausführungsform als ein Vorbearbeitungswerkzeug einsetzbar. In diesem Fall muss die vorbearbeitete Gewindebohrung in einem Nachbearbeitungsschritt mit Hilfe eines Fertigbearbeitungswerkzeugs nachbearbeitet werden. Als Fertigbearbeitungswerkzeug ist ein Gewindeformer, ein Helikalgewindeformer oder ein Axialgewindeformer einsetzbar. Alternativ dazu kann in einer zweiten Ausführungsform das Gewindebohr-Werkzeug selbst als ein Fertigbearbeitungswerkzeug ausgebildet sein. In diesem Fall kann der oben erwähnte zusätzliche Nachbearbeitungsschritt wegfallen.

In einer technischen Umsetzung kann der Gewindebohr-Hub in der Gewindebohr-Richtung unmittelbar mit einem Nutform-Hub verlängert werden. In diesem Fall wird das Gewindebohr-Werkzeug über die Soll-Gewindetiefe hinaus bis zum Erreichen einer Soll-Bohrungstiefe bewegt, und zwar mit einem Nutform-Vorschub sowie einer Nutform-Drehzahl, die zueinander nicht synchronisiert sind und/oder unterschiedlich zum Gewindebohr-Vorschub und zur Gewindebohr-Drehzahl sind.

Bevorzugt ist es, wenn am Ende des Nutformschrittes das Gewindeprofil vollständig in der Umlaufnut der Gewindebohrung belastungsfrei drehen kann. Die Umlaufnut wird während des Nutform-Hubes mit Hilfe der Hauptschneide sowie des Gewinde-Schneidzahns (oder allgemeiner Gewindezahn) des Gewindeprofils am Gewindebohr-Werkzeug erzeugt.

Bei Erreichen der Soll-Bohrungstiefe wird der Nutform-Vorschub auf 0 reduziert. Gleichzeitig wird auch die Nutform-Drehzahl auf 0 reduziert, um die für den Reversier-Hub erforderliche Drehrichtungsumkehr zu ermöglichen.

Beim Start des Reversier-Hubes wird das Gewindebohr-Werkzeug so angesteuert, dass der Gewinde-Schneidzahn belastungsfrei in den Gewindegang-Auslauf eingefahren werden kann, der in die Umlaufnut einmündet. Anschließend wird das Gewindebohr-Werkzeug in einer zur Gewindebohr-Richtung gegenläufigen Reversier-Richtung aus der Gewindebohrung herausgeführt, und zwar mit einem Reversier-Vorschub sowie damit synchronisierter Reversier-Drehzahl, wodurch der Gewinde-Schneidzahn ohne Materialabtrag aus der Gewindebohrung herausgedreht werden kann.

Während der Durchführung des Gewindebohr-Hubes, des Nutform-Hubes und des Reversier-Hubes bleiben bevorzugt die Kernbohrungs-Längsachse und die Rotationsachse des Gewindebohr-Werkzeuges durchgängig koaxial zueinander ausgerichtet.

Ein Gewindebohr-Werkzeug zur Durchführung eines solchen Verfahrens kann bevorzugt einen Spannschaft und einen daran anschließenden Gewindebohr-Körper aufweisen. Entlang dessen Längsachse kann zumindest eine Spannut bis zu einer stirnseitigen Hauptschneide an der Bohrerspitze erstrecken. An der stirnseitigen Hauptschneide laufen eine die Spannut begrenzende Spanfläche und eine stirnseitige Freifläche der Bohrerspitze zusammen. In der Werkzeug-Umfangrichtung betrachtet kann die Spannut durch zumindest einen Bohrersteg begrenzt sein. Die Spanfläche der Spannut kann unter Bildung einer Nebenschneide in eine außenumfangsseitige Rückenfläche des Bohrerstegs übergehen. An der außenumfangsseitigen Rückenfläche des Bohrersteges kann das Gewindeprofil mit zumindest einem Gewinde-Schneidzahn ausgebildet sein. Die Zahnhöhe des Schneidzahns ist in der Radialrichtung so bemessen, dass der Schneidzahn die Hauptschneide in der Radialrichtung nach außen um einen Radialversatz überragt. Gegebenenfalls kann der Schneidzahn in der Radialrichtung nach außen flächenbündig die Hauptschneide verlängern. Alternativ und/oder zusätzlich kann der Schneidzahn in der Axialrichtung betrachtet um einen Axialversatz hinter der Hauptschneide angeordnet sein.

In einer bevorzugten Ausführungsvariante kann das Gewindebohr-Werkzeug drei Bohrerstege aufweisen. Jeder dieser Bohrerstege ist zumindest mit einem Gewinde-Schneidzahn ausgebildet. Die Gewinde-Schneidzähne sind bevorzugt nicht mit gleicher Schneiden-Geometrie ausgebildet, sondern vielmehr unterschiedlich ausgeführt. Beispielhaft können in der Bohrer-Umfangsrichtung hintereinander ein Vorschneidzahn, ein Mittelschneidzahn und ein Fertigbearbeitungszahn unterschiedlicher Schneidengeometrie am Bohrer ausgebildet sein. Die Schneidzähne sind in der Axialrichtung zueinander versetzt am Gewindebohr-Werkzeug ausgebildet. Deren Versatzmaße sind so mit der Gewindebohr-Drehzahl und mit dem Gewindebohr-Vorschub abgestimmt, dass ein einwandfreies Gewindeschneiden gewährleistet ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Figur 1: in einer Seitenschnittdarstellung ein in einem Werkstück ausgebildetes Gewindesackloch;
- Figur 2: in einer Ansicht von vorne ein Gewindebohr-Werkzeug;
- Figuren 3 und 4: jeweils unterschiedliche Seitenansichten des Gewindebohr-Werkzeugs;
- Figuren 5 bis 8: jeweils Ansichten, die Verfahrensschritte zur Erzeugung des in der Figur 1 gezeigten Gewindesackloches veranschaulichen.

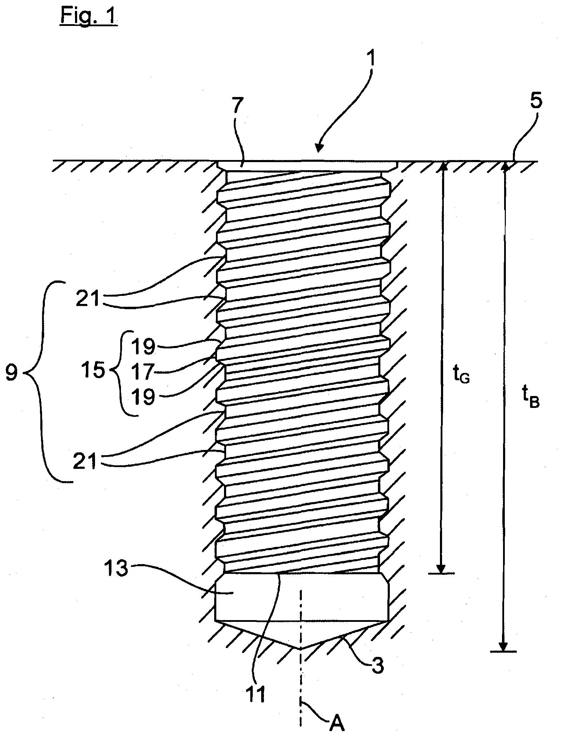

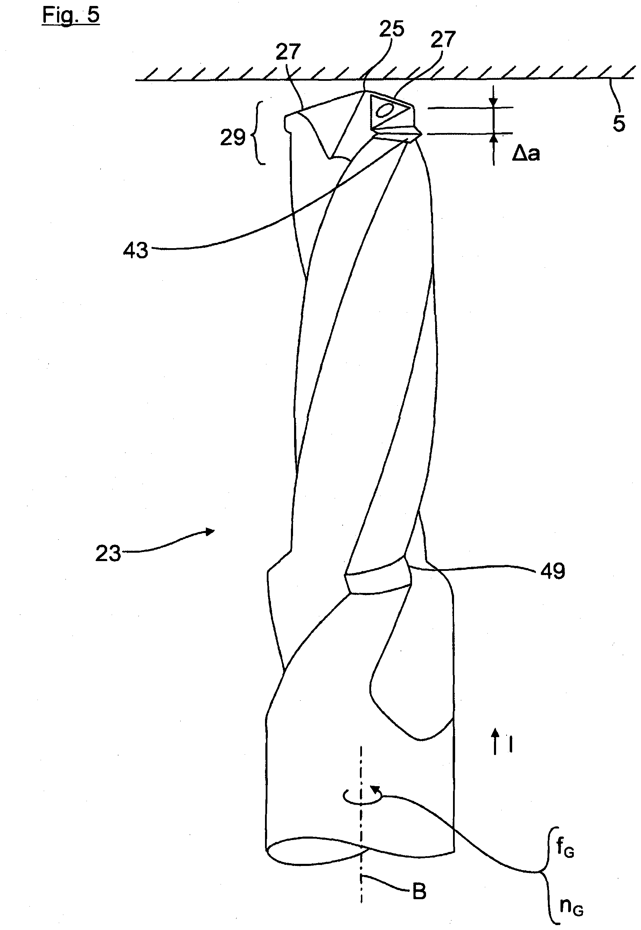

In der Figur 1 ist eine fertiggestellte Gewindesackloch-Bohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 5 bis 8 erläutert wird. Die Bohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Figur 1 weiter hervorgeht, mündet ein Gewindegang 15 des Innengewindes 9 mit einem Gewindeauslauf 11 in einer Umlaufnut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitliche Gewindeflanken 19 auf, die radial innen in einen Gewinde-Innenscheitel 21 übergehen.

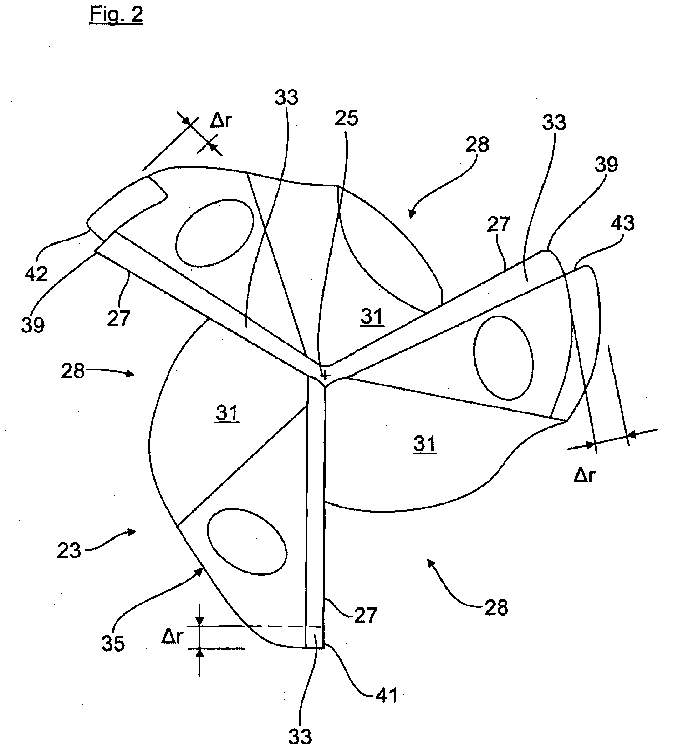

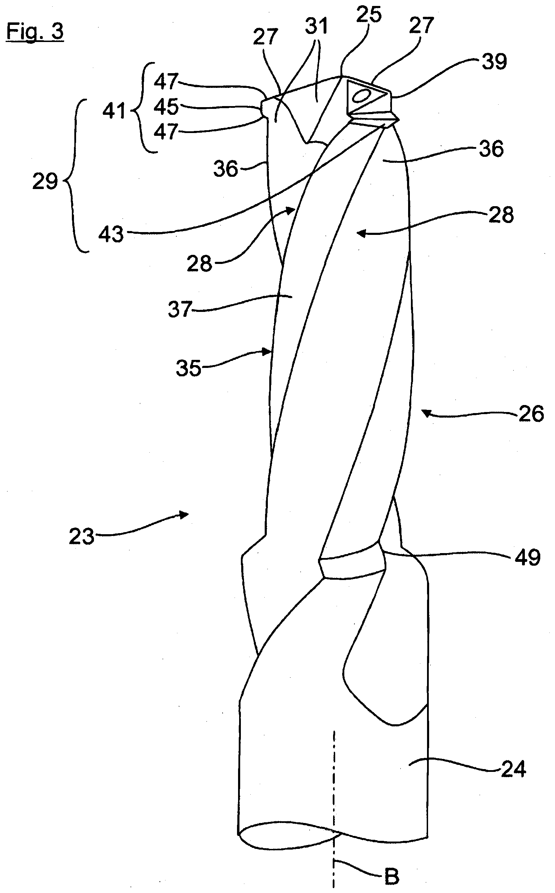

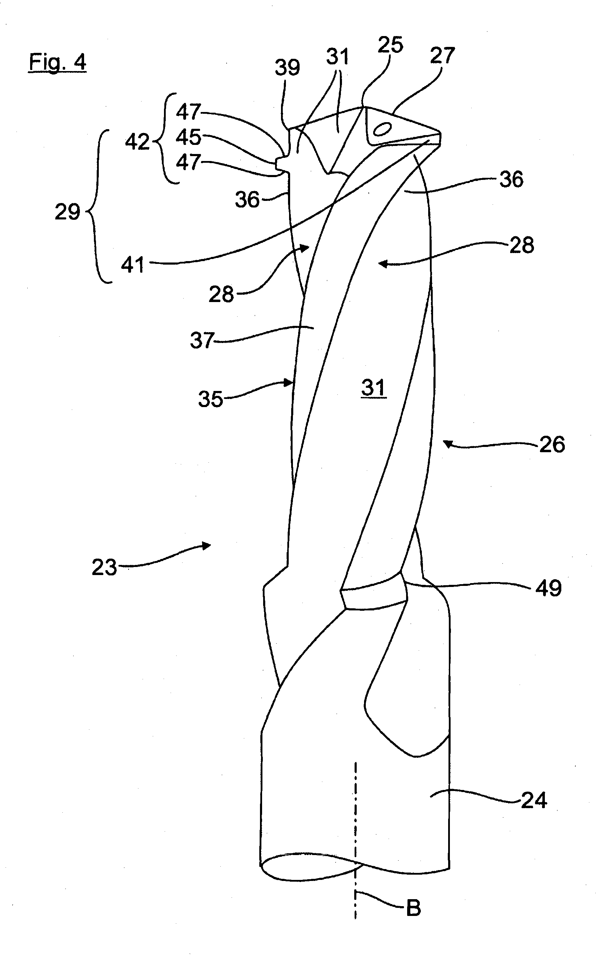

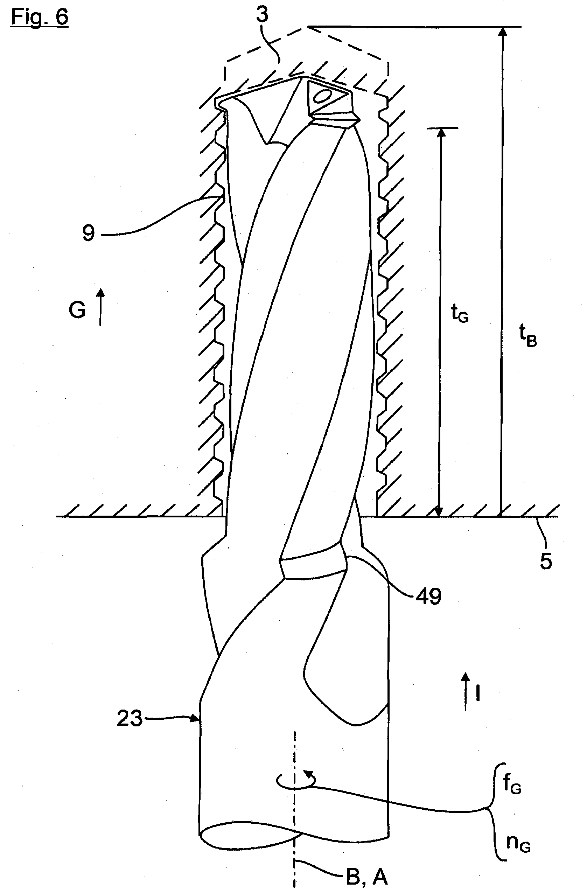

Die in der Figur 1 gezeigte Gewindesackloch-Bohrung 1 wird mit Hilfe eines nachfolgend anhand der Figuren 2 bis 4 beschriebenen Gewindebohr-Werkzeugs 23 durchgeführt. Demzufolge weist das Werkzeug 23 in der Figur 2 an seiner Bohrerspitze 25 drei gleichmäßig umfangsverteilte, stirnseitige Hauptschneiden 27 sowie ein in der Gewindebohr-Richtung I (Figur 5 oder 6) nacheilendes Gewindeprofil 29 auf.

Das Werkzeug 23 ist mit einem Spannschaft 24 sowie einem daran anschließenden Gewindebohr-Körper 26 aufgebaut, entlang dessen Bohrungsachse A sich insgesamt drei umfangsseitig verteilte Spannuten 28 bis zu der jeweiligen stirnseitigen Hauptschneide 27 an der Bohrerspitze 25 erstrecken.

An jeder Hauptschneide 27 läuft eine die Spannut 28 begrenzende Spanfläche 31 und eine stirnseitige Freifläche 33 der Bohrerspitze 25 zusammen. In der Werkzeug-Umfangsrichtung ist die jeweilige Spannut 28 durch einen Bohrersteg 35 begrenzt. Insgesamt weist das in den Figuren gezeigte Gewindebohr-Werkzeug 23 drei Bohrerstege 35 auf. Die Spanfläche 31 der Spannut 28 geht dabei unter Bildung einer Nebenschneide 36 in eine außenumfangsseitige Rückenfläche 37 des jeweiligen Bohrerstegs 35 über. Die Nebenschneide 36 und die stirnseitige Hauptschneide 27 laufen an einer radial äußeren Haupt-Schneidenecke 39 zusammen.

An den außenumfangsseitigen Rückenflächen 37 der drei Bohrerstege 35 weist das Gewindeprofil 29 jeweils einen Vorschneidzahn 41, einen Mittelschneidzahn 42 und einen Fertigschneidzahn 43 auf. Jeder der Schneidzähne 41, 42, 43 ist mit einer radial äußeren Gewindegrund-Schneidkante 45 sowie Gewindeflanken-Schneidkanten 47 ausgebildet, um den anhand der Figur 1 gezeigten Gewindegang 15 zu schneiden/zu formen. Die Schneidzähne 41 bis 43 sind dabei in unterschiedlichen Geometrien ausgeführt sowie mit unterschiedlichen Axialabständen Δa (nur in der Figur 5 angedeutet) von der Bohrerspitze 25 beabstandet, um den in der Figur 1 gezeigten Gewindegang 15 des Innengewindes 9 zu schneiden. Beispielhaft können die Vor-, Mittel- und Fertigschneidzähne 41, 42, 43 in der Axialrichtung unterschiedliche Axialmaße aufweisen und/oder in der Radialrichtung unterschiedliche Zahnhöhen Δr (Fig. 2) aufweisen. Exemplarisch können die Vor-, Mittel- und Fertigschneidzähne 41, 42, 43 in der Umfangsrichtung axial größer werden. Der Fertigschneidzahn 43 schneidet dann die gesamte Innengewinde-Kontur. Alternativ dazu kann der Fertigschneidzahn 43 auch als ein Formzahn ausgeführt sein, um die Gewindefestigkeit zu steigern.

Das Gewindebohr-Werkzeug 23 weist zudem am Übergang zwischen dem Gewindebohr-Körper 26 und dem Spannschaft 24 eine Schneidkante 49 zur Bildung der in der Figur 1 gezeigten Gewindesenkung 7 auf.

Nachfolgend wird anhand der Figuren 5 bis 8 das Verfahren zur Erzeugung der in der Figur 1 gezeigten Gewindesackloch-Bohrung 1 beschrieben: Demzufolge wird in der Figur 1 das Gewindebohr-Werkzeug 23 in einer Gewindebohr-Richtung I auf das noch nicht vorgebohrte Werkzeug 5 geführt und eine Einschuss-Bohrung durchgeführt. In einem Gewindebohr-Hub G erzeugen die Hauptschneiden 27 eine Kernlochbohrung und gleichzeitig das nacheilende Gewindeprofil 29 das Innengewinde 9 an der Innenwandung der Kernlochbohrung. Der Gewindebohr-Hub G erfolgt bei einem Gewindebohr-Vorschub f_{G} und bei damit synchronisierter Gewindebohr-Drehzahl n_{G} in einer Gewindebohr-Drehrichtung, und zwar bis die Soll-Gewindetiefe t_{G} erreicht ist (Figur 6).

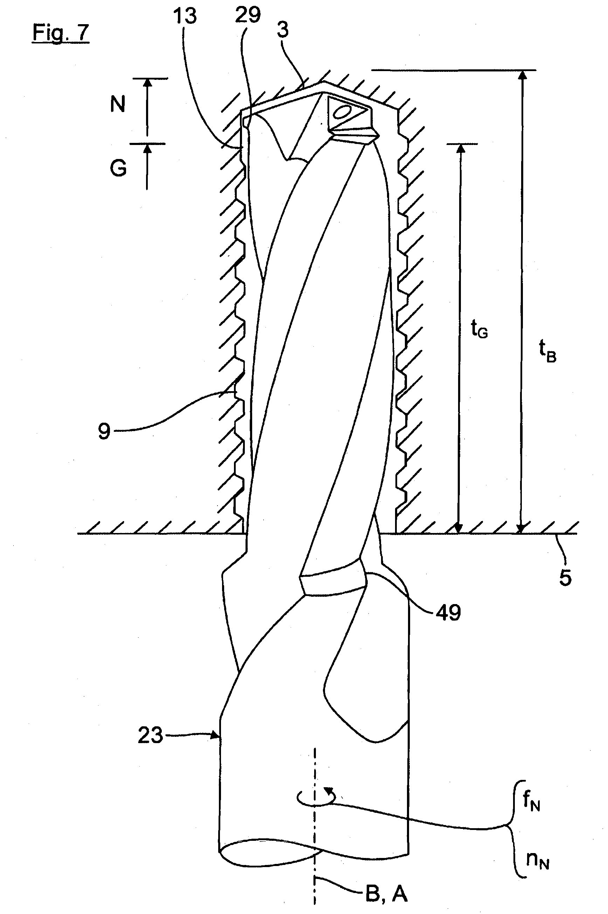

Unmittelbar anschließend wird ein Nutformschritt (Figur 7) durchgeführt, bei dem der Gewindebohr-Hub G in der Gewindebohr-Richtung I um einen Nutform-Hub N verlängert wird. Im Unterschied zum Gewindeform-Hub G sind im Nutform-Hub H der Nutform-Vorschub f_{N} und die Nutform-Drehzahl n_{N} des Gewindebohr-Werkzeugs 23 nicht zueinander synchronisiert sowie unterschiedlich zum vorangegangenen Gewindebohr-Vorschub f_{G} und zur Gewindebohr-Drehzahl n_{G}.

Auf diese Weise erzeugt das Gewindeprofil 29 mit seinen Vor-, Mittel- und Fertigschneidzähnen 41, 42, 43 die in der Figur 7 gezeigte Umlaufnut 13, in der das Gewindeprofil 29 belastungsfrei drehen kann. Der Nutform-Vorschub f_{N} sowie die Nutform-Drehzahl n_{N} sind so ausgelegt, dass eine übermäßig große Schneidenbelastung der Schneidzähne 41 bis 43 verhindert ist.

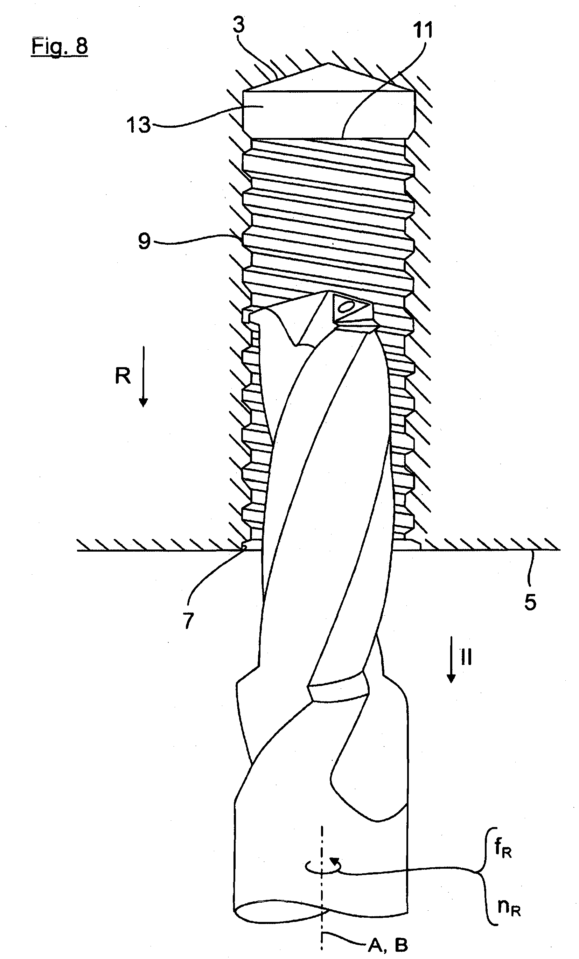

Bei Erreichen der Soll-Bohrungstiefe t_{B} wird sowohl der Nutform-Vorschub f_{N} als auch die Nutform-Drehzahl n_{N} auf 0 reduziert. Anschließend erfolgt zur Vorbereitung eines Reversier-Hubes R (Figur 8) eine Drehrichtungsumkehr. Im Reversier-Hub R (Figur 8) wird das Gewindebohr-Werkzeug 23 in einer Reversier-Richtung II (Figur 8) aus der Gewindebohrung 1 herausgeführt, und zwar mit einem entgegengesetzten Reversier-Vorschub f_{R} sowie damit synchronisierter Reversier-Drehzahl n_{R}. Diese Parameter sind so bemessen, dass das Gewindeprofil 29 des Gewindebohr-Werkzeugs 23 weitgehend belastungsfrei im Gewindegang 15 des Innengewindes 9 aus der Gewindebohrung 1 geführt wird.

Beim Start des Reversier-Hubes R wird das Gewindebohr-Werkzeug 23 von der Fertigungsanlage so angesteuert, dass die Schneidzähne 41, 42, 43 jeweils belastungsfrei in den Gewindegang-Auslauf 11, der in die Umlaufnut 13 mündet, eingefahren werden. Im weiteren Verlauf des Reversier-Hubes R wird das Gewindeprofil 29 des Gewindebohr-Werkzeugs 23 dann belastungsfrei durch den Gewindegang 15 des Innengewindes 9 nach außen gedreht.

## Patentansprüche

1. Verfahren zum Erzeugen einer Gewindebohrung (1) in einem Werkstück (5) mit einem Gewindebohr-Werkzeug (23), das an seiner Bohrerspitze (25) eine Hauptschneide (27) und ein in einer Gewindebohr-Richtung (I) nacheilendes Gewindeprofil (29) mit zumindest einem Gewinde-Schneidzahn (41, 42, 43) aufweist, wobei in einem Gewindebohr-Hub (G) die Hauptschneide (27) eine Kernlochbohrung erzeugt und gleichzeitig das Gewindeprofil (29) ein Innengewinde (9) an der Innenwandung der Kernlochbohrung bildet bis zum Erreichen einer Soll-Gewindetiefe (t_{G}), und zwar bei einem Gewindebohr-Vorschub (f_{G}) in der Gewindebohr-Richtung (I) und einer damit synchronisierten Gewindebohr-Drehzahl (n_{G}) des Gewindebohr-Werkzeugs (23), wobei nach dem Gewindebohr-Hub (G) ein gegenläufiger Reversier-Hub (R) erfolgt, bei dem das Gewindebohr-Werkzeug (23) in einer Reversier-Richtung (II) aus der Gewindebohrung herausgeführt wird, und zwar mit entgegengesetztem Reversier-Vorschub (f_{R}) sowie damit synchronisierter Reversier-Drehzahl (n_{R}), so dass das Gewindeprofil (29) des Gewindebohr-Werkzeugs (23) im Gewindegang (15) des Innengewindes (9) aus der Bohrung geführt wird, **dadurch gekennzeichnet, dass** zwischen dem Gewindebohr-Hub (G) und dem Reversier-Hub (R) ein Nutformschritt erfolgt, bei dem der Gewindebohr-Hub (G) in der Gewindebohr-Richtung (I) um einen Nutform-Hub (N) verlängert wird, und zwar zur Bildung einer an das Innengewinde (9) anschließenden Umlaufnut (13) ohne Gewindesteigung, in der das Gewindeprofil (29) belastungsfrei drehen kann.

2. Verfahren nach Anspruch 1, **dadurch gekennzeichnet, dass** in dem Nutformschritt das Gewindebohr-Werkzeug (23) über die Soll-Gewindetiefe (t_{G}) hinaus bis zum Erreichen einer Soll-Bohrungstiefe (t_{B}) in der Gewindebohr-Richtung (I) bewegt wird, und zwar mit einem Nutform-Vorschub (f_{N}) und einer Nutform-Drehzahl (n_{N}), die zueinander nicht synchronisiert sind und/oder unterschiedlich zum Gewindebohr-Vorschub (f_{G}) und zur Gewindebohr-Drehzahl (n_{G}) sind.

3. Verfahren nach Anspruch 1 oder 2, **dadurch gekennzeichnet, dass** im Nutformschritt das Gewindeprofil (29) des Gewindebohr-Werkzeugs (23) vollständig in der Umlaufnut (13) der Gewindebohrung (1) dreht.

4. Verfahren nach Anspruch 1, 2 oder 3, **dadurch gekennzeichnet, dass** die Umlaufnut (13) während des Nutform-Hubes (N) mittels der Hauptschneide (27) und des Gewinde-Schneidzahns (41, 42, 43) des Gewindeprofils (29) erzeugt wird.

5. Verfahren nach einem der vorhergehenden Ansprüche, **dadurch gekennzeichnet, dass** bei Erreichen der Soll-Bohrungstiefe (t_{B}) der Nutform-Vorschub (f_{N}) auf 0 reduziert wird und die Nutform-Drehzahl (n_{N}) auf 0 reduziert wird zur Vorbereitung einer für den Reversier-Hub (R) erforderlichen Drehrichtungsumkehr.

6. Verfahren nach einem der vorhergehenden Ansprüche, **dadurch gekennzeichnet, dass** beim Start des Reversier-Hubs (R) das Gewindebohr-Werkzeug (23) so angesteuert wird, dass der Gewinde-Schneidzahn (41, 42, 43) belastungsfrei, das heißt insbesondere ohne Materialabtrag, in den Gewindegang-Auslauf (11), der in die Umlaufnut (13) mündet, eingefahren wird.

7. Verfahren nach einem der vorhergehenden Ansprüche, **dadurch gekennzeichnet, dass** während des Gewindebohr-Hubes (G), des Nutform-Hubes (N) und des Reversier-Hubes (R) die Rotationsachse (B) des Gewindebohr-Werkzeugs (23) und die Bohrungs-Längsachse (A) zueinander koaxial ausgerichtet sind.

8. Verfahren nach einem der vorhergehenden Ansprüche, **dadurch gekennzeichnet, dass** das Gewindebohr-Werkzeug als ein Vorbearbeitungswerkzeug eingesetzt wird, und dass die vorbearbeitete Gewindebohrung in einem Nachbearbeitungsschritt mit Hilfe eines Fertigbearbeitungswerkzeugs nachbearbeitet wird, wobei als Fertigbearbeitungswerkzeug ein Gewindeformer, ein Helikalgewindeformer oder ein Axialgewindeformer einsetzbar ist.

9. Verfahren nach einem der Ansprüche 1 bis 7, **dadurch gekennzeichnet, dass** das Gewindebohr-Werkzeug selbst als ein Fertigbearbeitungswerkzeug eingesetzt wird.

10. Gewindebohr-Werkzeug zum Erzeugen einer Gewindebohrung (1) in einem Werkstück (5), mit einem Spannschaft (24) und einem daran anschließenden Gewindebohr-Körper (26), entlang dessen Längsachse (A) sich zumindest eine Spannut (28) bis zu einer stirnseitigen Hauptschneide (27) an der Bohrerspitze (25) erstreckt, an welcher Hauptschneide (27) eine die Spannut (28) begrenzende Spanfläche (31) und eine stirnseitige Freifläche (33) der Bohrerspitze (25) zusammenlaufen, wobei in der Werkzeug-Umfangsrichtung die Spannut (28) durch zumindest einen Bohrersteg (35) begrenzt ist und die Spanfläche (31) der Spannut (28) unter Bildung einer Nebenschneide (36) in eine außenumfangsseitige Rückenfläche (37) des Bohrerstegs (35) übergeht, und wobei die Nebenschneide (36) und die stirnseitige Hauptschneide (27) an einer radial äußeren Haupt-Schneidenecke (39) zusammenlaufen, wobei an der außenumfangseitigen Rückenfläche (37) des Bohrerstegs (35) ein Gewindeprofil (29) mit zumindest einen Gewindeprofil-Schneidzahn (41, 42, 43) ausgebildet ist, wobei der Gewindeprofil-Schneidzahn (41, 42, 43) eine radial äußere Profilgrund-Schneidkante (45) aufweist, die die Haupt-Schneidenecke (39) radial nach außen um eine Zahnhöhe (Δr) überragt, **dadurch gekennzeichnet, dass** das Gewindebohr-Werkzeug (23) mit einer Schneidkante (49) ausgebildet ist, mit der eine umlaufende Gewindesenkung (7) in der Bohrungsöffnung der Bohrung (1) erzeugt wird, und dass die umlaufende Gewindesenkung (7) während des Nutformschrittes erzeugt wird.

## Claims

1. Method for producing a threaded bore (1) in a workpiece (5) with a tapping tool (23) which has a main cutting edge (27) and a thread profile (29) trailing in a tapping direction (I) on its drill bit (25), said thread profile (29) having at least one threaded cutting tooth (41, 42, 43), wherein in a tapping stroke (G), the main cutting edge (27) generates a core hole bore and at the same time the thread profile (29) forms an internal thread (9) on the inner walling of the core hole bore until a target thread depth (t_{G}) is reached, namely with a tapping feed (f_{G}) in the tapping direction (I) and a synchronised tapping rotation speed (n_{G}) of the tapping tool (23), wherein after the tapping stroke (G) an opposite reversing stroke (R) takes place, in which the tapping tool (23) is led out of the threaded bore in a reversing direction (II), namely with an opposite reversing feed (f_{R}), and thus a reversing rotation speed (n_{R}) synchronised therewith, so that the thread profile (29) of the tapping tool (23) in the thread (15) of the internal thread (9) is guided out of the bore, **characterised in that** between the tapping stroke (G) and the reversing stroke (R), a groove-shaping step takes place in which the tapping stroke (G) is extended in the tapping direction (I) by a groove-forming stroke (N), namely for forming a circumferential groove (13) following the internal thread (9) without thread pitch, in which the thread profile (29) can rotate without load.

2. Method according to claim 1, **characterised in that** in the groove forming step, the tapping tool (23) is moved beyond the target thread depth (t_{G}) until a target bore depth (t_{B}) is reached in the tapping direction (I), namely with a groove-shaping feed (f_{N}) and a groove-shaping rotation speed (n_{N}), which are not synchronised with each other and/or are different from the tapping feed (f_{G}) and the tapping rotation speed (n_{G}).

3. Method according to claim 1 or 2, **characterised in that** in the groove-shaping step the thread profile (29) of the tapping tool (23) rotates completely in the circumferential groove (13) of the threaded bore (1).

4. Method according to claim 1, 2 or 3, **characterised in that** the circumferential groove (13) is generated during the groove-shaping stroke (N) by means of the main cutting edge (27) and the threaded cutting tooth (41, 42, 43) of the thread profile (29).

5. Method according to any one of the preceding claims, **characterised in that** upon reaching the target bore depth (t_{B}), the groove-shaping feed (f_{N}) is reduced to 0 and the groove-shaping rotation speed (n_{N}) is reduced to 0 in preparation for reversing the direction of rotation required for the reversing stroke (R).

6. Method according to any one of the preceding claims, **characterised in that** at the start of the reversing stroke (R) the tapping tool (23) is controlled so that the threaded cutting tooth (41, 42, 43) is retracted without load, i.e. in particular without material removal, into the thread outlet (11), which opens into the circumferential groove (13).

7. Method according to any one of the preceding claims, **characterised in that** during the tapping stroke (G), the groove-shaping stroke (N) and the reversing stroke (R), the rotation axis (B) of the tapping tool (23) and the bore longitudinal axis (A) are aligned coaxially with each other.

8. Method according to any one of the preceding claims, **characterised in that** the tapping tool is used as a pre-machining tool, and **in that** the pre-machined threaded bore is reworked in a reworking step using a finishing tool, wherein a thread former, a helical thread former or an axial thread former can be used as the finishing tool.

9. Method according to any one of claims 1 to 7, **characterised in that** the tapping tool itself is used as a finishing tool.

10. Tapping tool for producing a threaded bore (1) in a workpiece (5), with a clamping shank (24) and a tapping body (26) connecting thereon, along whose longitudinal axis (A) at least one flute (28) extends up to a frontal main cutting edge (27) on the drill bit (25), on which main cutting edge (27) a rake face (31) delimiting the flute (28) and a frontal free surface (33) of the drill bit (25) converge, wherein in the tool circumferential direction, the flute (28) is delimited by at least one drill land (35) and the rake face (31) of the flute (28) merges into an outer peripheral back surface (37) of the drill land (35) forming an auxiliary cutting edge (36), and wherein the auxiliary cutting edge (36) and the frontal main cutting edge (27) converge on a radially outer main cutting corner (39), wherein a thread profile (29) with at least one thread profile cutting tooth (41, 42, 43) is formed on the outer peripheral back surface (37) of the drill land (35), wherein the thread profile cutting tooth (41, 42, 43) has a radially outer profile base cutting edge (45) that projects beyond the main cutting corner (39) radially outward by a tooth height (Δr), **characterised in that** the tapping tool (23) is formed with a cutting edge (49) with which a circumferential thread reduction (7) is generated in the bore opening of the bore (1), and **in that** the circumferential thread reduction (7) is generated during the groove-shaping step.

## Revendications

1. Procédé de production d'un trou taraudé (1) dans une pièce (5) avec un outil de taraudage (23), qui présente sur sa pointe de foret (25) une arête coupante principale (27) et un profilé fileté (29) en arrière dans une direction de taraudage (I) avec au moins une dent de coupe formant filet (41, 42, 43), dans lequel, dans une course de taraudage (G), l'arête coupante principale (27) produit un avant-trou de taraudage et simultanément le profilé fileté (29) forme un filet intérieur (9) sur la paroi intérieure de l'avant-trou de taraudage jusqu'à ce qu'une profondeur de filetage théorique (T_{G}) soit atteinte, et ce pour une avance de taraudage (f_{G}) dans la direction de taraudage (I) et une vitesse de rotation de taraudage (n_{G}) de l'outil de taraudage (23) synchronisée avec celle-ci, dans lequel, après la course de taraudage (G), une course inverse (R) opposée s'effectue, pendant laquelle l'outil de taraudage (23) est retiré du trou taraudé dans une direction inverse (II), et ce avec une avance inverse (f_{R}) opposée ainsi qu'une vitesse de rotation inverse (n_{R}) synchronisée avec celle-ci, de sorte que le profilé fileté (29) de l'outil de taraudage (23) est retiré du trou dans le pas de vis (15) du filet intérieur (9), **caractérisé en ce qu'**une étape de rainurage s'effectue entre la course de taraudage (G) et la course inverse (R), pendant laquelle la course de taraudage (G) dans la direction de taraudage (I) est prolongée d'une course de rainurage (N), et ce avec formation d'une rainure périphérique (13) se raccordant au filet intérieur (9) sans pas de filet dans lequel le profilé fileté (29) peut tourner sans contrainte.

2. Procédé selon la revendication 1, **caractérisé en ce que**, à l'étape de rainurage, l'outil de taraudage (23) est déplacé dans la direction de taraudage (I) au-delà de la profondeur de filetage théorique (T_{G}) jusqu'à ce qu'une profondeur de trou théorique (t_{B}) soit atteinte, et ce avec une avance de rainurage (f_{N}) et une vitesse de rotation de rainurage (n_{N}) qui ne sont pas synchronisées l'une par rapport à l'autre et/ou sont différentes de l'avance de taraudage (f_{G}) et de la vitesse de rotation de taraudage (n_{G}).

3. Procédé selon la revendication 1 ou 2, **caractérisé en ce que**, à l'étape de rainurage, le profilé fileté (29) de l'outil de taraudage (23) tourne entièrement dans la rainure périphérique (13) du trou taraudé (1).

4. Procédé selon la revendication 1, 2 ou 3, **caractérisé en ce que** la rainure périphérique (13) est produite pendant la course de rainurage (N) au moyen de l'arête coupante principale (27) et de la dent de coupe formant filet (41, 42, 43) du profilé fileté (29).

5. Procédé selon l'une quelconque des revendications précédentes, **caractérisé en ce que**, lorsque la profondeur de trou théorique (t_{B}) est atteinte, l'avance de rainurage (f_{N}) est réduite à 0 et la vitesse de rotation de rainurage (n_{N}) est réduite à 0 pour préparer un changement de sens de rotation nécessaire à la course inverse (R).

6. Procédé selon l'une quelconque des revendications précédentes, **caractérisé en ce que**, lors du démarrage de la course inverse (R), l'outil de taraudage (23) est commandé de sorte que la dent de coupe formant filet (41, 42, 43) est rentrée sans contrainte, c'est-à-dire en particulier sans enlèvement de matière, dans la sortie de pas de vis (11) qui débouche dans la rainure périphérique (13).

7. Procédé selon l'une quelconque des revendications précédentes, **caractérisé en ce que**, pendant la course de taraudage (G), la course de rainurage (N) et la course inverse (R), l'axe de rotation (B) de l'outil de taraudage (23) et l'axe longitudinal de trou (A) sont orientés de manière coaxiale l'un par rapport à l'autre.

8. Procédé selon l'une quelconque des revendications précédentes, **caractérisé en ce que** l'outil de taraudage est utilisé comme un outil de pré-usinage, et **en ce que** le trou taraudé pré-usiné est post-usiné à l'aide d'un outil de finissage au cours d'une étape de post-usinage, dans lequel un taraud travaillant par refoulement, dans lequel un taraud travaillant par refoulement hélicoïdal ou un taraud travaillant par refoulement axial peut être utilisé comme outil de finissage.

9. Procédé selon l'une quelconque des revendications 1 à 7, **caractérisé en ce que** l'outil de taraudage lui-même est utilisé comme un outil de finissage.

10. Outil de taraudage destiné à produire un trou taraudé (1) dans une pièce (5), avec une tige de serrage (24) et un corps de trou taraudé (26) se raccordant à celle-ci, le long de l'axe longitudinal (A) duquel au moins une rainure de serrage (28) s'étend jusqu'à une arête coupante principale (27) frontale sur la pointe de foret (25), arête coupante principale (27) sur laquelle une face de coupe (31) délimitant la rainure de serrage (28) et une face de dépouille (33) frontale de la pointe de foret (25) convergent, dans lequel, dans la direction périphérique d'outil, la rainure de serrage (28) est délimitée par au moins une âme de foret (35) et la face de coupe (31) de la rainure de serrage (28) se prolonge en une face de dépouille complémentaire (37), côté périphérie extérieure, de l'âme de foret (35) avec formation d'une arête de coupe secondaire (36), et dans lequel l'arête de coupe secondaire (36) et l'arête coupante principale (27) frontale convergent sur un bec principal (39) radialement extérieur, dans lequel un profilé fileté (29) avec au moins une dent de coupe de profilé fileté (41, 42, 43) est réalisé sur la face de dépouille complémentaire (37), côté périphérie extérieure, de l'âme de foret (35), dans lequel la dent de coupe de profilé fileté (41, 42, 43) présente une arête de coupe de base de profilé (45) radialement extérieure, qui fait saillie radialement vers l'extérieur d'une hauteur de dent (Δr) du bec principal (39), **caractérisé en ce que** l'outil de taraudage (23) est réalisé avec une arête de coupe (49) avec laquelle un logement taraudé (7) périphérique est produit dans l'ouverture de trou du trou (1), et que le logement taraudé (7) périphérique est produit pendant l'étape de rainurage.
